# EUROPÄISCHE PATENTSCHRIFT

(11) **EP 2 581 176 B1**
(45) Veröffentlichungstag und Bekanntmachung des Hinweises auf die Patenterteilung: **18.05.2016**
(21) Anmeldenummer: 12188137.9
(22) Anmeldetag: 11.10.2012
(51) Int. Cl.: B25G 1/08, G01B 3/30

(54) **Lehrenset**
Gauge set
Ensemble d'étalons

(30) Priorität: 14.10.2011 DE 102011054493
(43) Veröffentlichungstag der Anmeldung: 17.04.2013
(73) Patentinhaber: TKR Spezialwerkzeuge GmbH, 58285 Gevelsberg (DE)
(72) Erfinder: Mann, Thomas, 42281 Wuppertal (DE)
(74) Vertreter: Kalkoff & Partner

(56) Entgegenhaltungen:
- WO-A1-88/04221
- US-A- 1 875 784
- US-A- 2 217 648
- US-A- 4 498 239
- US-A- 6 047 606
- US-A1- 2009 094 756

## Beschreibung

Die Erfindung betrifft ein Lehrenset mit mindestens zwei an einem Lehrenträger angeordneten Lehren, die jeweils eine Prüföffnung zur abschnittsweisen und spielfreien Aufnahme eines Steckerkontaktes einer Daten und/oder elektrischen Leitung eines Kraftfahrzeuges aufweisen. Ein Lehrenset, mit mindestens zwei an einem Lehrenträger angeordneten Lehren, ist aus US 2009094756 A1 bekannt.

Moderne Kraftfahrzeuge, wie PKW, LKW oder Motorräder weisen mittlerweile eine Vielzahl von elektronischen und elektrischen Einheiten auf, welche bspw. mit zentralen Steuereinrichtungen, Versorgungsaggregaten und/oder untereinander verbunden sind. Hierzu dienen geeignete Datenleitungen und/oder elektrische Leitungen, die in der Regel zu einem vieladrigen Leitungsbündel zusammengefasst werden, welches endseitig mit Steckern und/oder Buchsen versehen ist, die eine lösbare Verbindung des Leitungsbündels mit entsprechenden Steckern und Buchsen ermöglichen.

Im Falle von Störungen im elektrischen System oder Datenleistungssystem der Kraftfahrzeuge ist es erforderlich, eine Überprüfung der Leitungen durch Kontrolle des Signal- und/oder Stromflusses vorzunehmen. Hierzu ist es bekannt, Prüfeinrichtungen zu verwenden, welche es erlauben, die Leitungszustände im Betrieb des Kraftfahrzeugs zu überprüfen. Zum Anschluss der Prüfvorrichtung sind dabei geeignete Anschlusskabel erforderlich, die eine Zwischenschaltung der Prüfeinrichtung ermöglichen, so dass die zu prüfenden Daten- und/oder elektrischen Leitungen im Betrieb des Kfz kontrolliert werden können.

Aufgrund einer Vielzahl unterschiedlicher, Kfz-hersteller- und Kfz-typabhängiger Stecker und/oder Buchsen der Daten- und/oder elektrischen Leitungen der Kraftfahrzeuge ist es erforderlich, eine entsprechende Anzahl an Anschlusskabeln vorzuhalten, welche den Anschluss der Prüfvorrichtung erlauben. Von besonderer Bedeutung ist dabei eine zuverlässige Auswahl des geeigneten Anschlusskabels. Dieses muss sowohl gewährleisten, dass eine zuverlässig leitende Verbindung hergestellt wird, als auch sicherstellen, dass es nicht zu Beschädigungen der Buchsen und/oder Steckerkontakte kommt. Im Falle der Verwendung von nicht an die Stecker angepassten Buchsen kann es zu deren Beschädigung kommen, insbesondere wenn die Steckerkontakte einen Querschnitt aufweisen, der die Querschnittsgröße der Buchsenöffnungen deutlich übersteigt. Dies kann dazu führen, dass die Öffnungen der einzelnen Anschlussleitungen der Anschlussbuchsen durch die Steckerkontakte eine nicht nur elastische, sondern plastische Verformung erfahren.

Zur Vermeidung derartiger Beschädigungen ist es bekannt Lehren zu verwenden, die eine Ermittlung der Querschnitte der Steckerkontakte erlauben. Die Verwendung einzelner Lehren ist jedoch unhandlich und unterliegt der ständigen Gefahr, dass einzelne Lehren verloren gehen.

Hiervon ausgehend liegt der Erfindung die Aufgabe zugrunde, ein Lehrenset bereitzustellen, das eine zuverlässige Ermittlung der Querschnittsabmessungen eines Steckerkontaktes ermöglicht und sich einfach und zuverlässig handhaben lässt.

Die Erfindung löst die Aufgabe durch ein Lehrenset mit den Merkmalen des Anspruchs 1. Vorteilhafte Weiterbildungen der Erfindung sind in den abhängigen Ansprüchen angegeben.

Kennzeichnend für das erfindungsgemäße Lehrenset zur Ermittlung der Querschnittsabmessungen eines Steckerkontaktes einer Daten- und/oder elektrischen Leitung eines Kraftfahrzeuges ist, dass die mindestens zwei Lehren an einem Lehrenträger angeordneten sind.

Das erfindungsgemäße Lehrenset ermöglicht unter Verwendung der einzelnen, unterschiedliche Öffnungsquerschnitte aufweisenden Lehren die Feststellung der Querschnittsabmessungen des Steckerkontaktes, so dass in Abhängigkeit von der ermittelten Dimension des Steckerkontaktes ein geeignetes Anschlusskabel zur Verbindung mit einer Prüfvorrichtung ausgewählt werden kann. Die Anordnung der Lehren an dem Lehrenträger gewährleistet dabei eine gute Handhabbarkeit und beugt überdies einem Verlust einzelner Lehren in zuverlässiger Weise vor.

Vom Nutzer des Lehrensets wird lediglich erwartet, dass dieser, ggf. in Abhängigkeit vom Erfahrungsgrad nach einer groben Vorauswahl, den anzuschließenden Steckerkontakt schrittweise dahingehend überprüft, ob die Lehren zur Aufnahme des Steckerkontaktes geeignet sind, wobei der Nutzer bei einer spielbehafteten Anordnung der Lehre auf dem Steckerkontakt sukzessive Lehren mit geringeren Öffnungsquerschnitten auf ihre Eignung hin überprüft, bis die Lehre ermittelt ist, die sich zuverlässig spielfrei an dem Steckerkontakt anordnen lässt.

Auf Basis der so ausgewählten Lehre kann dann ein geeignetes Anschlusskabel mit einer entsprechend dem Lehrenmaß ausgebildeten Anschlussbuchse ausgewählt werden, welches eine zuverlässige Verbindung mit den Steckerkontakten gewährleistet, ohne dass dabei eine Gefahr einer Beschädigung oder Zerstörung der Anschlussbuchsen und/oder der Steckerkontakte besteht. Die Zusammenfassung der Lehren zu einem Lehrenset erlaubt es, die Handhabung besonders zu vereinfachen, so dass sehr schnell und zugleich zuverlässig die Querschnittsabmessung des zu prüfenden Steckerkontaktes ermittelt werden kann. Auf die Verwendung separater Lehren, welche üblicherweise ungeordnet und zum Teil nicht vollständig gelagert werden, kann verzichtet werden, was eine besonders einfache sowie kostengünstige Prüfung der Steckerkontakte ermöglicht. Der erfindungsgemäß vorgesehene Lehrenträger, an dem die Lehren angeordnet sind und der sowohl einstückig als auch mehrteilig ausgebildet sein kann, gewährleistet dabei die dauerhafte und sofortige Verfügbarkeit sämtlicher zur Prüfung erforderlicher Lehren, so dass in besonders zuverlässiger Weise die Querschnittsabmessungen des zu prüfenden Steckerkontaktes ermittelt werden können.

Die Anordnung der Lehren an dem Lehrenträger ist grundsätzlich frei wählbar, wobei zur Gewährleistung einer einfachen Handhabbarkeit eine Anordnung dergestalt bevorzugt ist, welche eine gute Zugänglichkeit der Lehren gewährleistet. Nach einer besonders vorteilhaften Ausgestaltung der Erfindung ist vorgesehen, dass die Lehren zwischen einer Ablageposition und mindestens einer Gebrauchsposition verstellbar an dem Lehrenträger angeordnet sind. Eine entsprechende Ausgestaltung des Lehrensets sieht vor, dass die Lehren aus einer Ablageposition, in der diese insgesamt ein kompakten Form des Lehrensets gewährleisten und in der die Lehren besonders vorteilhafterweise vor Beschädigungen geschützt sind, zu deren Nutzung gegenüber dem Lehrenträger in eine Gebrauchsposition verstellbar sind, in der die Lehren eine Prüfung der Querschnittsabmessung des Steckerkontaktes ermöglichen. Nach Verwendung der jeweiligen Lehre kann diese dann wieder aus der Gebrauchsposition in die Ablageposition verstellt werden, in der die Lehren besonders bevorzugt wieder vor Beschädigungen geschützt sind und eine kompakte Handhabung des Lehrensets ermöglichen.

Die Verstellbarkeit der Lehren zwischen der Ablageposition und der Gebrauchsposition ist dabei grundsätzlich frei wählbar. So kann die Anordnung bspw. derart erfolgen, dass die Lehren gegenüber dem Lehrenträger bspw. verschoben werden. Nach einer besonders vorteilhaften Ausgestaltung der Erfindung ist jedoch vorgesehen, dass der Lehrenträger zur gelenkigen, insbesondere zur verschwenkbaren Aufnahme der Lehren ausgebildet ist. Eine verschwenkbare Anordnung der Lehren an dem Lehrenträger lässt sich besonders einfach und kostengünstig herstellen. Zudem erlaubt sie eine Ausgestaltung des Lehrensets, bei der die Lehren in eine oder mehrere Gebrauchspositionen verstellbar sind, in der die Lehren eine gute Zugänglichkeit aufweisen, um so eine komfortable Prüfung der Querschnittsabmessung des Steckerkontakts zu ermöglichen. Auch lässt sich eine verschwenkbare Aufnahme der Lehren besonders einfach und kostengünstig sowie fehlerunanfällig realisieren, so dass insgesamt ein Lehrenset bereitgestellt werden kann, das einen geringen Herstellungspreis aufweist, gleichzeitig jedoch eine zuverlässige Überprüfung ermöglicht.

Die Ausgestaltung des Lehrenträgers zur schwenkbaren Aufnahme der Lehren ist dabei ebenfalls grundsätzlich frei wählbar. Nach einer besonders vorteilhaften Ausgestaltung der Erfindung ist jedoch vorgesehen, dass der Lehrenträger mindestens eine, vorzugsweise zwei Gelenkstiften zur schwenkbaren Aufnahme der Lehren aufweist, wobei die Gelenkstiften besonders bevorzugt parallel zueinander ausgerichtet sind. Gemäß dieser Ausgestaltung der Erfindung ist mindestens ein Gelenkstift vorgesehen, um den die Lehren verschwenkbar sind. In Abhängigkeit von der Anzahl der vorzusehenden Lehren und der zu erreichenden Kompaktheit des Lehrensets können auch mehrere Gelenkstifte verwendet werden, an denen die Lehren schwenkbar angeordnet sind. Besonders bevorzugt wird jedoch eineAusgestaltung des Lehrensets mit zwei Gelenkstiften, welche parallel zueinander ausgerichtet sind, wobei der Abstand der Gelenkstifte von den Abmessungen der Lehren abhängt. Eine entsprechende Ausgestaltung des Lehrensets mit zwei Gelenkstiften erlaubt eine besonders kompakte Bauweise, was die Handhabbarkeit in ergänzender Weise verbessert.

Grundsätzlich weist das erfindungsgemäße Lehrenset bereits eine gute Zugänglichkeit zu den einzelnen Lehren auf. Nach einer besonders vorteilhaften Weiterbildung der Erfindung ist vorgesehen, dass die auch grundsätzlich einstückig mit dem Lehrenträger ausbildbaren Lehren lösbar mit dem Lehrenträger verbunden sind. Diese Ausgestaltung der Erfindung ermöglicht es zusätzlich, die Lehren in dem Fall zu verwenden, in dem der zur Verfügung stehende Arbeitsraum eine Zugänglichkeit mit dem Lehrenset nicht ermöglicht. Im Anschluss an die Nutzung der einzelnen Lehren können diese dann wieder mit dem Lehrenträger verbunden werden, wodurch sich wieder eine einfache Handhabung des Lehrensets ergibt.

Die Ausgestaltung der Lehren ist grundsätzlich frei wählbar, wobei diese in ihrer einfachsten Ausgestaltung einstückig ausgebildet sind. Gemäß einer besonders vorteilhaften Ausgestaltung der Erfindung ist jedoch vorgesehen, dass die Lehren einen mit dem Lehrenträger verbundenen Lehrengrundkörper und einen die Prüföffnung umfassenden Lehrenkopf aufweisen, wobei der Lehrenkopf lösbar mit dem Lehrengrundkörperverbunden ist. Diese Ausgestaltung der Erfindung ermöglicht es in besonders einfacher Weise, den mit der Prüföffnung versehenen Lehrenkopf von dem Lehrengrundkörper zu trennen, so dass bei einer bspw. bauraumbedingt nicht gegebenen Zugänglichkeit des Lehrensets zum Steckerkontakt in einfacher Weise der in der Regel besonders klein bemessene Lehrenkopf zur Prüfung des Steckerkontaktes verwendet werden kann. Die lösbare Verbindung des Lehrenkopfs mit dem Lehrengrundkörper kann grundsätzlich in beliebiger Weise ausgestaltet sein, wobei üblicherweise eine form- und/oder kraftschlüssige Verbindung vorgesehen ist, welche zum einen eine sichere Anordnung des Lehrenkopfs am Lehrengrundkörper gewährleistet und zum anderen jedoch auch eine Trennbarkeit für den Fall ermöglicht, in dem der Lehrenkopf zur Prüfung des Steckerkontaktes vom Lehrgrundkörper gelöst werden muss.

Wie bereits an obiger Stelle ausgeführt, ist die konkrete Ausgestaltung des Lehrensets, insbesondere die Anordnung der Lehren an dem Lehrenträger grundsätzlich frei wählbar. Nach einer besonders vorteilhaften Ausgestaltung der Erfindung ist jedoch vorgesehen, dass die Lehrenköpfe der an zwei Gelenkstiften angeordneten Lehren in ihrer Ablageposition einander zugewandt sind. Gemäß dieser Ausgestaltung der Erfindung weist das Lehrenset zwei parallel zueinander angeordnete Gelenkstiften auf, an denen jeweils die Lehren aus ihrer Ablageposition in die Gebrauchsposition verschwenkbar angeordnet sind. Gerner ist gemäß dieser Ausgestaltung der Erfindung vorgesehen, dass die Lehren in ihrer Ablageposition einander zugewandt sind, so dass das Lehrenset in der Nichtgebrauchsposition besonders kompakt und somit gut handhabbar ist. Darüber hinaus kann durch diese Ausgestaltung eine Verschmutzung der Prüföffnungen zumindest reduziert werden, nachdem die einander gegenüberliegende Lehrenköpfe die Prüföffnungen zumindest teilweise überdecken.

Eine ergänzende Verbesserung der Handhabbarkeit sowie des Schutzes der Lehren wird gemäß einer weiteren vorteilhaften Ausgestaltung der Erfindung dadurch erreicht, dass die Lehren in ihrer Ablageposition durch Träger überdeckt sind, die mit den Gelenkstiften verbunden sind. Die Träger sind dabei besonders vorteilhafterweise derart bemessen, dass sie die Lehren im Wesentlichen vollständig überdecken, wobei zwar grundsätzlich die Träger auch derart ausgestaltet sein können, dass sie die in der Ablageposition gelagerten Lehren seitlich überragen. Dies ist jedoch nicht zwingend erforderlich so dass eine besonders kompakte Bauform des Lehrensets nach Art eines Multifunktionsmessers erzielbar ist.

Besonders vorteilhafterweise ist ferner vorgesehen, dass der Öffnungsquerschnitt der Lehren senkrecht zu einer Längsachse der Lehren angeordnet ist, was es ermöglicht, durch eine axial gerichtete Bewegung der Lehre diese auf dem zu prüfenden Steckerkontakt aufzuschieben. Insbesondere in Verbindung mit einer Anordnung der Lehren an einem Gelenkstift ergibt sich dadurch eine besonders einfache und zuverlässige Handhabbarkeit des Lehrensets, wobei die Betätigungskraft gut kontrollierbar auf die Lehren übertragbar ist.

Eine weitere Ausgestaltung der Erfindung sieht vor, dass an den Lehren und/oder an dem Lehrenträger Rastmittel zur Lagesicherung der Lehren in der Ablageposition und/oder der Gebrauchsposition ausgebildet sind. Die Rastmittel ermöglichen eine zuverlässige Fixierung der Lehren in einer oder mehrerer Gebrauchspositionen und/oder in der Ablageposition, wobei die Rastierung der Ablageposition verhindert, dass Lehren unbeabsichtigt aus ihrer Ablageposition heraus bewegt werden, in der sie unter Umständen beschädigt werden können. Die konkrete Ausgestaltung der Rastierung ist dabei grundsätzlich frei wählbar. Besonders vorteilhafterweise sind an den Lehren und/oder dem Lehrenträger Rastmarken angeordnet, die mit entsprechenden Rastnocken an geeigneten Anlageflächen zusammenwirken.

Die zur Herstellung des Lehrensets verwendbaren Materialien sind frei wählbar. Vorteilhafterweise ist jedoch vorgesehen, dass die Lehren aus einem Kunststoff, besonders bevorzugt faserverstärkten Kunststoff, bspw. einem glasfaserverstärkten Kunststoff wie PA 6.6 Gf₃₀ hergestellt sind. Die Träger können, ebenso wie ggf. vorgesehene Gelenkstifte, aus einem Metall gebildet sein, was die Widerstandsfähigkeit des Lehrensets erhöht.

Zur Erleichterung der Ermittlung der Querschnittsabmessungen des Steckerkontakts ist nach einer weiteren Ausgestaltung der Erfindung vorgesehen, dass die Lehren mit voneinander abweichenden optischen Markierungen versehen sind. Optische Markierungen können dabei bspw. Zahlen oder Farbmarkierungen sein, welche bei einer entsprechenden Farb- bzw. Zahlencodierung der anzuschließenden Verbindungskabel eine schnelle und zuverlässige Auswahl der geeigneten Anschlusskabel ermöglicht.

Ein Ausführungsbeispiel der Erfindung wird nachstehend mit Bezug auf die Zeichnungen näher erläutert. In den Zeichnungen zeigen:
- Fig. 1: eine perspektivische Ansicht eines Lehrensets mit schwenkbar an einem Lehrenträger angeordneten Lehren in ihrer Ablageposition und

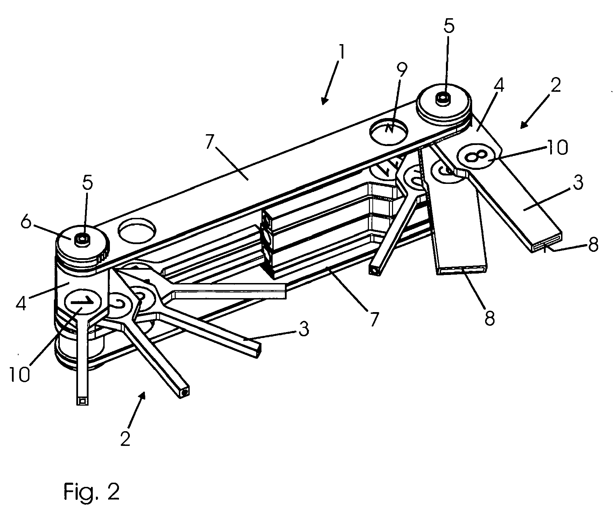

- Fig. 2: eine perspektivische Ansicht des Lehrensets von Fig. 1, wobei die Lehren teilweise aus ihrer Ablageposition herausgeschwenkt sind.

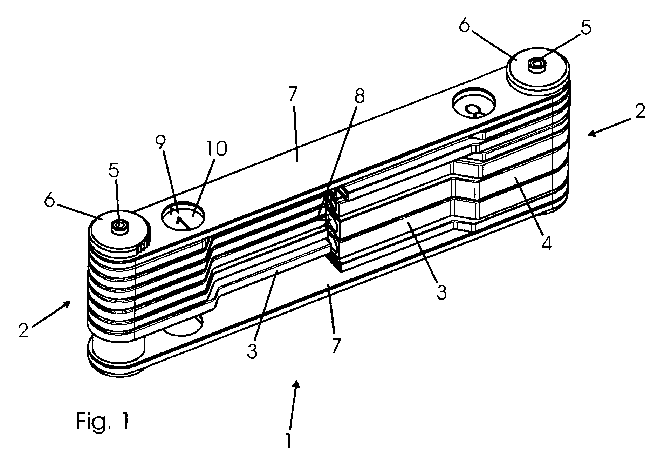

In Fig. 1 ist eine Ausführungsform eines Lehrensets 1 mit insgesamt 14 verschiedenen Lehren 2 dargestellt. Die Lehren 2 weisen einen Lehrengrundkörper 4 sowie einen sich an den Lehrengrundkörper 4 anschließenden Lehrenkopf 3 auf, der an seinem dem Lehrengrundkörper 4 gegenüberliegenden Ende eine Prüföffnung 8 aufweist. Die Öffnungsquerschnitte der Prüföffnungen 8 der einzelnen Lehren 2 unterscheiden sich dabei voneinander, so dass das Lehrenset 1 insgesamt vierzehn Lehren 2 mit unterschiedlichen Prüföffnungen 8 aufweist.

Die Lehren 2 sind zu Gruppen von jeweils sieben Lehren 2 zusammengefasst, welche jeweils schwenkbar an einem Gelenkstift 5 angeordnet sind, welcher sich im der Prüföffnung 8 gegenüberliegenden Bereich der Lehren 2 durch den Lehrengrundkörper 4 erstreckt.

Die Gelenkstifte 5 zur Aufnahme der zwei Gruppen von jeweils sieben Lehren 2 erstrecken sich im Abstand voneinander parallel zwischen zwei Trägern 7 durch an den Trägern 7 angeordnete Aufnahmeöffnungen. Zur Sicherung der Position der Lehren 2 an dem Gelenkstift 5 ist auf ein Ende des Gelenkstifts 5 ein Befestigungsrad 6 aufgeschraubt, wobei im Bereich zwischen dem Befestigungsrad 6 und der dort direkt angrenzenden Lehre sowie dem Kopf des Gelenkstifts 5 und der dort direkt angrenzenden Lehre jeweils ein Träger 7 angeordnet ist, welche die Lehren 2 in der in Fig. 1 dargestellten Ablageposition überdecken. Die Träger 7 weisen dabei Öffnungen 9 auf, welche in der Ablageposition der Lehren 2 den Blick auf eine optische Markierung 10 der unmittelbar an den Träger 7 angrenzenden Lehre 2 erlaubt, wobei die optische Markierung durch eine Zahl gebildet wird. Die Träger 7 bilden somit gemeinsam mit den Gelenkstiften 5 einen Lehrenträger.

Zum Gebrauch des Lehrensets sind die Lehren 2 aus ihrer wie in Fig. 1 dargestellten Ablageposition herausschwenkbar, so dass die Prüföffnungen 8 auf die zu prüfenden, hier nicht dargestellten Steckerkontakte, aufgeschoben werden können. Eine Gebrauchsposition besteht dabei dann, wenn die Lehre zur Prüfung der Querschnittsmessung eines Steckerkontaktes genutzt werden kann. Eine Gebrauchsposition kann dabei bspw. bei einer 180°-Verschwenkung der Lehren 2 aus der Ablageposition, aber auch bei einer nur teilweisen Herausschwenkung der Lehren 2 vorliegen, wobei dies in Abhängigkeit von dem zu prüfenden Steckerkontakt 2 und dessen Zugänglichkeit gewählt werden kann.

## Patentansprüche

1. Lehrenset mit mindeste zwei an einem Lehrenträger angeordneten Lehren, **dadurch gekennzeichnet, dass** die Lehren (2) jeweils eine Prüföffnung (8) zur abschnittsweisen und spielfreien Aufnahme eines Steckerkontaktes einer Daten und/oder elektrischen Leitung eines Kraftfahrzeuges aufweisen, wobei die jeweiligen Prüföffnungen (8) voneinander abweichende Öffnungsquerschnitte besitzen.

2. Lehrenset nach Anspruch 1, **dadurch gekennzeichnet, dass** die Lehren (2) zwischen einer Ablageposition und einer Gebrauchsposition verstellbar an dem Lehrenträger angeordnet sind.

3. Lehrenset nach Anspruch 1 oder 2, **dadurch gekennzeichnet, dass** der Lehrenträger zur gelenkigen, insbesondere zur verschwenkbaren Aufnahme der Lehren (2) ausgebildet ist.

4. Lehrenset nach einem der vorhergehenden Ansprüche, **dadurch gekennzeichnet, dass** der Lehrenträger mindestens eine, vorzugsweise zwei Gelenkstifte (5) zur schwenkbaren Aufnahme der Lehren aufweist, wobei die Gelenkstifte (5) besonders bevorzugt parallel zueinander ausgerichtet sind.

5. Lehrenset nach einem der vorhergehenden Ansprüche, **dadurch gekennzeichnet, dass** die Lehren (2) lösbar mit dem Lehrenträger verbunden sind.

6. Lehrenset nach einem der vorhergehenden Ansprüche, **dadurch gekennzeichnet, dass** jede Lehre (2) einen mit dem Lehrenträger verbundenen Lehrengrundkörper (4) und einen die Prüföffnung (8) umfassenden Lehrenkopf (3) aufweist, wobei der Lehrenkopf lösbar mit dem Lehrengrundkörper (4) verbunden ist.

7. Lehrenset nach einem der vorhergehenden Ansprüche, **dadurch gekennzeichnet, dass** die Lehrenköpfe (4) der an zwei Gelenkstiften (5) angeordneten Lehren (2) in ihrer Ablageposition einander zugewandt sind.

8. Lehrenset nach einem der vorhergehenden Ansprüche, **dadurch gekennzeichnet, dass** die Gelenkstifte (5) über zwei die Lehren (2) in ihrer Ablageposition überdeckende Träger (7) verbunden sind.

9. Lehrenset nach einem der vorhergehenden Ansprüche, **dadurch gekennzeichnet, dass** der Öffnungsquerschnitt der Lehren (2) senkrecht zu einer Längsachse der Lehre (2) angeordnet ist.

10. Lehrenset nach einem der vorhergehenden Ansprüche, **dadurch gekennzeichnet, dass** an den Lehren (2) und/oder an dem Lehrenträger Rastmittel zur Lagesicherung der Lehren (2) in der Ablageposition und/oder der Gebrauchsposition ausgebildet sind.

## Claims

1. A gauge set with at least two gauges arranged on a gauge support, **characterized in that** each of the gauges (2) have a test opening (8) for the sectional, clearance-free accommodation of a plug contact of a data and/or electrical line of a motor vehicle, wherein the respective test openings (8) have opening cross-sections which deviate from each other.

2. The gauge set according to claim 1, **characterized in that** the gauges (2) are adjustably arranged between a storage position and a use position on the gauge support.

3. The gauge set according to claim 1 or 2, **characterized in that** the gauge support is designed for the articulated, in particular pivotable, accommodation of the gauges (2).

4. The gauge set according to one of the preceding claims, **characterized in that** the gauge support has at least one, preferably two, pivot pins (5) for the pivotable accommodation of the gauges, wherein the pivot pins (5) are aligned particularly preferably parallel to each other.

5. The gauge set according to one of the preceding claims, **characterized in that** the gauges (2) are releasably connected to the gauge support.

6. The gauge set according to one of the preceding claims, **characterized in that** each gauge (2) has a gauge main body (4) connected to the gauge support and a gauge head (3) comprising the test opening (8), wherein the gauge head is releasably connected to the gauge main body (4).

7. The gauge set according to one of the preceding claims, **characterized in that** the gauge heads (4) of the gauges (2) arranged on two pivot pins (5) face each other in their storage position.

8. The gauge set according to one of the preceding claims, **characterized in that** the pivot pins (5) are connected by means of two carriers (7) which cover the gauges (2) in their storage position.

9. The gauge set according to one of the preceding claims, **characterized in that** the opening cross-section of the gauges (2) is arranged perpendicular to a longitudinal axis of the gauges (2).

10. The gauge set according to one of the preceding claims, **characterized in that** latching means are formed on the gauges (2) and/or on the gauge support for securing the position of the gauges (2) in the storage position and/or the use position.

## Revendications

1. Ensemble d'étalons comprenant au moins deux étalons disposés sur un support d'étalons, **caractérisé en ce que** les étalons (2) présentent respectivement une ouverture de contrôle (8) destinée à recevoir, par tronçons et sans jeu, un logement de fiche d'une ligne de données et/ou électrique d'un véhicule automobile, les ouvertures de contrôle (8) respectives présentant des sections transversales d'ouverture différentes les uns des autres.

2. Ensemble d'étalons selon la revendication 1, **caractérisé en ce que** les étalons (2) sont disposés sur le support d'étalons de façon à pouvoir être réglés entre une position de rangement à une position d'utilisation.

3. Ensemble d'étalons selon la revendication 1 ou 2, **caractérisé en ce que** le support d'étalons est conçu pour une réception articulée, en particulier pivotante, des étalons (2).

4. Ensemble d'étalons selon l'une des revendications précédentes, **caractérisé en ce que** le support d'étalons présente au moins une et de préférence deux tiges d'articulation (5) pour la réception pivotante des étalons, les tiges d'articulation (5) étant en particulier orientées de préférence parallèlement l'une à l'autre.

5. Ensemble d'étalons selon l'une des revendications précédentes, **caractérisé en ce que** les étalons (2) sont reliés de façon détachable au support d'étalons.

6. Ensemble d'étalons selon l'une des revendications précédentes, **caractérisé en ce que** chaque étalon (2) présente un corps de base d'étalon (4) relié au support d'étalons et une tête de base d'étalon (3) comportant l'ouverture de contrôle (8), la tête d'étalon étant reliée de façon détachable au corps de base d'étalon (4).

7. Ensemble d'étalons selon l'une des revendications précédentes, **caractérisé en ce que** les têtes d'étalon (4) des étalons (2) disposés sur deux tiges d'articulation (5) sont tournées l'une vers l'autre dans leur position de rangement.

8. Ensemble d'étalons selon l'une des revendications précédentes, **caractérisé en ce que** les tiges d'articulation (5) sont reliées par le biais de deux supports (7) recouvrant les étalons (2) dans leur position de rangement.

9. Ensemble d'étalons selon l'une des revendications précédentes, **caractérisé en ce que** la section transversale d'ouverture des étalons (2) est disposée perpendiculairement à un axe longitudinal des étalons (2).

10. Ensemble d'étalons selon l'une des revendications précédentes, **caractérisé en ce que** des moyens d'encliquetage sont formés sur les étalons (2) et/ou sur le support d'étalons, pour maintenir la position des étalons (2) dans la position de rangement et/ou dans la position d'utilisation.
